# EUROPEAN PATENT APPLICATION

(11) **EP 3 823 179 A1**
(43) Date of publication of application: **19.05.2021**
(21) Application number: 18925789.2
(22) Date of filing: 12.07.2018
(51) Int. Cl.: H04B 7/06, H04W 16/28, H04W 24/06

(54) **USER EQUIPMENT**

(71) Applicant: NTT DoCoMo, Inc., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2018/026304
(87) International publication number: WO 2020/012594

(57) **Abstract**

A user terminal according to one aspect of the present disclosure includes: a receiving section that receives a Beam Failure Detection Reference Signal (BFD-RS); and a control section that, when radio link quality of resource configurations of part of BFD-RSs of configured BFD-RSs is worse than a given threshold, indicates an instance related to a beam failure from a lower layer to a higher layer. According to the one aspect of the present disclosure, it is possible to perform a beam recovery procedure at a high speed.

## Description

### Technical Field

The present disclosure relates to a user terminal of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A and LTE Rel. 10 to 14) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.

Legacy LTE systems (LTE Rel. 8 to 14) monitor radio link quality (RLM: Radio Link Monitoring). When a Radio Link Failure (RLF) is detected by RLM, re-establishment of Radio Resource Control (RRC) connection is requested to a user terminal (UE: User Equipment).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is studied for a future radio communication system (e.g., NR) to perform a procedure (that may be referred to as a Beam Failure Recovery (BFR) procedure or BFR) of detecting a beam failure and switching a beam to another beam.

According to Rel-15 NR, BFR is triggered when quality of all beam failure detection reference signals becomes less than a given threshold. When all beams have failures, it is assumed there is not a UL beam (UL link), either, that the UE can use. Therefore, according to BFR that has been studied so far, a BFRQ is transmitted by using a random access channel (PRACH: Physical Random Access Channel).

However, it is necessary to reserve PRACH resources in advance for PRACH-based BFR. However, when the number of beams is large, there is a problem that resources are unnecessarily wasted. Furthermore, PRACH-based BFR follows a random access procedure, and therefore there is also a problem that latency occurs until beam recovery. As a result, there is a risk that a communication throughput lowers.

It is therefore one of objects of the present disclosure to provide a user terminal that can perform a beam recovery procedure at a high speed.

### Solution to Problem

A user terminal according to one aspect of the present disclosure includes: a receiving section that receives a Beam Failure Detection Reference Signal (BFD-RS); and a control section that, when radio link quality of resource configurations of part of BFD-RSs of configured BFD-RSs is worse than a given threshold, indicates an instance related to a beam failure from a lower layer to a higher layer.

### Advantageous Effects of Invention

According to one aspect of the present disclosure, it is possible to perform a beam recovery procedure at a high speed.

### Brief Description of Drawings

Fig. 1 is a diagram illustrating a beam recovery procedure according to Rel-15 NR
Fig. 2 is a diagram illustrating one example of PBF detection.
Figs. 3A and 3B are diagrams illustrating one example of PBFRQ transmission after PBF detection.
Figs. 4A and 4B are diagrams illustrating one example of a PBFRQ MAC CE configuration.
Figs. 5A and 5B are diagrams illustrating one example of reconfiguration/activation of a TCI after PBFRQ transmission.
Fig. 6 is a diagram illustrating one example of a schematic configuration of a radio communication system according to one embodiment.
Fig. 7 is a diagram illustrating one example of an overall configuration of a base station according to the one embodiment.
Fig. 8 is a diagram illustrating one example of a function configuration of the base station according to the one embodiment.
Fig. 9 is a diagram illustrating one example of an overall configuration of a user terminal according to the one embodiment.
Fig. 10 is a diagram illustrating one example of a function configuration of the user terminal according to the one embodiment.
Fig. 11 is a diagram illustrating one example of hardware configurations of the base station and the user terminal according to the one embodiment.

### Description of Embodiments

It is studied for NR to perform communication by using beam forming. For example, a UE and a base station (e.g., gNodeB (gNB)) may use a beam (also referred to as a transmission beam or a Tx beam) used to transmit a signal, and a beam (also referred to as a reception beam or an Rx beam) used to receive a signal.

When beam forming is used, a beam is more susceptible to an influence of blockage due to an obstacle, and therefore it is assumed that radio link quality worsens. There is a risk that worsening of the radio link quality frequently causes a Radio Link Failure (RLF). When the RLF occurs, reconnection with a cell needs to be established. Therefore, the frequent occurrence of the RLF causes deterioration of a system throughput.

To prevent an occurrence of an RLF, it is studied for NR to perform a Beam Failure Recovery (that may be referred to as BFR or Layer 1/Layer 2 (L1/L2) beam recovery) procedure when quality of a specific beam worsens. In addition, the BFR procedure may be referred to simply as BFR.

In addition, a beam failure in the present disclosure may be referred to as a link failure.

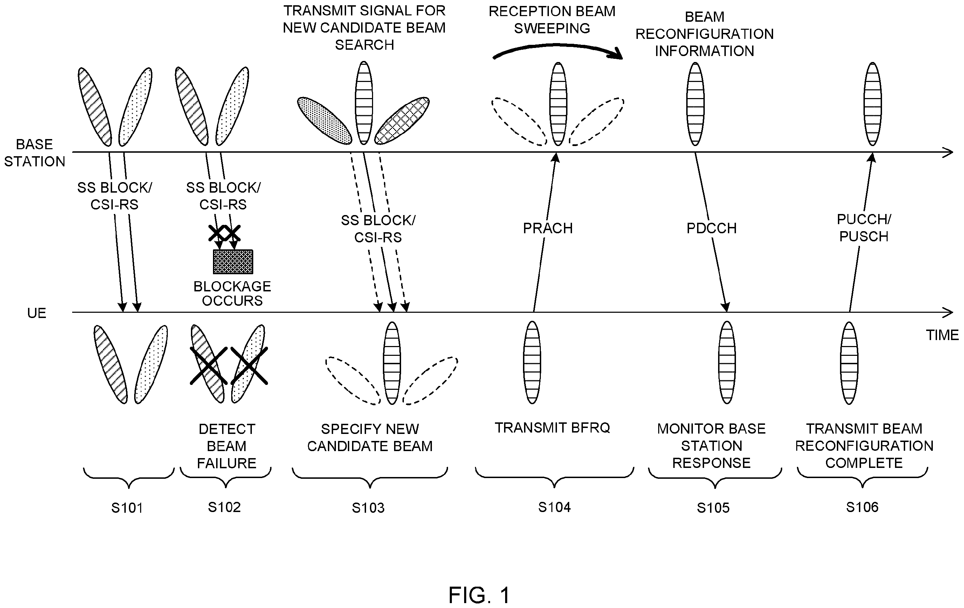

Fig. 1 is a diagram illustrating one example of a beam recovery procedure according to Rel-15 NR. The number of beams is one example, and is not limited to this. In an initial state (step S101) in Fig. 1, the UE performs measurement based on a Reference Signal (RS) resource that is transmitted by using two beams.

The RS may be at least one of a Synchronization Signal Block (SSB) and a Channel State Information RS (CSI-RS). In addition, the SSB may be referred to as an SS/Physical Broadcast Channel (PBCH) block.

The RS may be at least one of a Primary Synchronization Signal (PSS: Primary SS), a Secondary Synchronization Signal (SSS: Secondary SS), a Mobility Reference Signal (MRS: Mobility RS), a signal included in an SSB, the SSB, a CSI-RS, a DeModulation Reference Signal (DMRS) and a beam-specific signal, or signals that are configured by expanding or changing these signals. The RS measured in step S101 may be referred to as a Beam Failure Detection RS (BFD-RS).

In step S102, a radio wave from the base station is blocked, and therefore the UE cannot detect the BFD-RS (or received quality of the RS deteriorates). This blockage may occur due to an influence of, for example, an obstacle between the UE and the base station, a fading or an interference.

When a given condition is satisfied, the UE detects a beam failure. When, for example, Block Error Rates (BLER) of all of configured BFD-RSs (BFD-RS resource configurations) are less than a threshold, the UE may detect an occurrence of a beam failure. When the occurrence of the beam failure is detected, a lower layer (Physical (PHY) layer) of the UE may give notification of (indicate) a beam failure instance to a higher layer (MAC layer).

In this regard, decision criteria are not limited to the BLER, and may be reference signal received power in the physical layer (L1-RSRP: Layer 1 Reference Signal Received Power). Furthermore, instead of RS measurement or in addition to the RS measurement, a beam failure may be detected based on a downlink control channel (PDCCH: Physical Downlink Control Channel). It may be expected that the BFD-RS is in Quasi-Co-Location (QCL) with a DMRS of a PDCCH monitored by the UE.

In this regard, the QCL is an index that indicates a statistical property of a channel. When, for example, a certain signal/channel and another signal/channel have a QCL relationship, the QCL relationship may mean that it is possible to assume that at least one of a doppler shift, a doppler spread, an average delay, a delay spread and a spatial parameter (e.g., spatial reception parameter (spatial Rx parameter)) is identical (the QCL holds for at least one of these parameters) between a plurality of these different signals/channels.

In addition, the spatial reception parameter may be associated with a reception beam (e.g., reception analog beam) of the UE, and a beam may be specified based on spatial QCL. The QCL (or at least one element of the QCL) in the present disclosure may be read as spatial QCL (sQCL).

Information related to BFD-RSs (e.g., indices, resources, the number, the number of ports and precoding of RSs), and information related to Beam Failure Detection (BFD) (e.g., the above-described threshold) may be configured (notified) to the UE by using a higher layer signaling. The information related to the BFD-RSs may be referred to as information related to BFR resources.

In the present disclosure, the higher layer signaling may be one or a combination of, for example, a Radio Resource Control (RRC) signaling, a Medium Access Control (MAC) signaling and broadcast information.

The MAC signaling may use, for example, an MAC Control Element (MAC CE) or a MAC Protocol Data Unit (PDU). The broadcast information may be, for example, a Master Information Block (MIB), a System Information Block (SIB), Remaining Minimum System Information (RMSI) or Other System Information (OSI).

When receiving a beam failure instance notification from the PHY layer of the UE, the MAC layer of the UE may start a given timer (that may be referred to as a beam failure detection timer). When receiving the beam failure instance notification a certain number of times (e.g., *beamFailurelnstanceMaxCount* configured by RRC) or more until the given timer expires, the MAC layer of the UE may trigger BFR (for example, the MAC layer may start one of random access procedures described below).

When receiving no notification from the UE, or when receiving a given signal (a beam failure recovery request in step S104) from the UE, the base station may decide that the UE has detected the beam failure.

In step S103, the UE starts searching new candidate beams used for new communication to perform beam recovery. The UE may select the new candidate beam associated with a given RS by measuring the given RS. The RS measured in step S103 may be referred to as a New Candidate Beam Identification RS (NCBI-RS), a CBI-RS or a Candidate Beam RS (CB-RS). The NCBI-RS may be the same as or different from the BFD-RS. In addition, the new candidate beam may be may be referred to simply as a candidate beam.

The UE may determine a beam associated with an RS that satisfies the given condition as the new candidate beam. The UE may determine the new candidate beam based on an RS whose L1-RSRP exceeds the threshold among configured NCBI-RSs. In this regard, the decision criteria are not limited to the L1-RSRP. The L1-RSRP related to the SSB may be referred to as SS-RSRP. The L1-RSRP related to the CSI-RS may be referred to as CSI-RSRP.

Information related to the NCBI-RSs (e.g., resources, the number, the number of ports and precoding of the RSs), and information related to New Candidate Beam Identification (NCBI) (e.g., above-described threshold) may be configured (notified) to the UE by using a higher layer signaling. The information related to the NCBI-RSs may be obtained based on the information related to the BFD-RSs. The information related to the NCBI-RSs may be referred to as information related to NCBI resources.

In addition, the BFD-RS and the NCBI-RS may be read as a Radio Link Monitoring Reference Signal (RLM-RS: Radio Link Monitoring RS).

In step S104, the UE that has specified the new candidate beam transmits a beam recovery request (Beam Failure Recovery reQuest (BFRQ)). The beam failure recovery request may be referred to as a beam recovery request signal or a beam failure recovery request signal.

The BFRQ may be transmitted by using at least one of, for example, an uplink control channel (PUCCH: Physical Uplink Control Channel), a random access channel (PRACH: Physical Random Access Channel), an uplink shared channel (PUSCH: Physical Uplink Shared Channel) and a configured grant PUSCH.

The BFRQ may include information of the new candidate beam specified in step S103. A resource for the BFRQ may be associated with the new candidate beam. The information of the beam may be notified by using a Beam Index (BI), a port index of a given reference signal and a resource index (e.g., CSI-RS Resource Indicator (CRI) or an SSB Resource Indicator (SSBRI)).

According to Rel-15 NR, Contention-Based BFR (CB-BFR) that is BFR based on a contention-based Random Access (RA) procedure, and Contention-Free BFR (CF-BFR) that is BFR based on a contention-free random access procedure are studied. According to CB-BFR and CF-BFR, the UE may transmit a preamble (also referred to as an RA preamble, a random access channel (PRACH: Physical Random Access Channel) or an RACH preamble) as the BFRQ by using a PRACH resource.

According to CB-BFR, the UE may transmit a preamble that is selected at random from one or a plurality of preambles. On the other hand, according to CF-BFR, the UE may transmit a preamble that is allocated from the base station uniquely to the UE. According to CB-BFR, the base station may allocate an identical preamble to a plurality of UEs. According to CF-BFR, the base station may allocate a preamble specifically to the UE.

In addition, CB-BFR and CF-BFR may be referred to as Contention-Based PRACH-based BFR (CBRA-BFR: CB PRACH-based BFR) and Contention-Free PRACH-based BFR (CFRA-BFR: CF PRACH-based BFR), respectively. CBRA-BFR may be referred to as BFR CBRA. CFRA-BFR may be referred to as BFR CFRA.

In any case of CB-BFR and CF-BFR, information related to a PRACH resource (RA preamble) may be notified by, for example, a higher layer signaling (RRC signaling). For example, the information may include information that indicates an association between a detected DL-RS (beam) and the PRACH resource, or may associate a different PRACH resource with each DL-RS.

In step S105, the base station that has detected the BFRQ transmits a response signal (that may be referred to as a gNB response) to the BFRQ from the UE. The response signal may include reconfiguration information (e.g., DL-RS resource configuration information) of one or a plurality of beams.

The response signal may be transmitted in, for example, a UE-common search space of a PDCCH. The response signal may be notified by using a PDCCH (DCI) whose Cyclic Redundancy Check (CRC) has been scrambled by an identifier (e.g., Cell-Radio RNTI (C-RNTI)) of the UE. The UE may decide at least one of a transmission beam and a reception beam to use based on the beam reconfiguration information.

The UE may monitor the response signal based on at least one of a Control REsource Set (CORESET) for BFR and a search space set for BFR.

Regarding CB-BFR, when the UE receives the PDCCH associated with the C-RNTI related to the UE, it may be decided that contention resolution has succeeded.

A duration during which the UE monitors a response to the BFRQ from the base station (e.g., gNB) may be configured to processing in step S105. The duration may be referred to as, for example, a gNB response window, a gNB window or a beam failure recovery request response window. When receiving no gNB response detected in the window duration, the UE may retransmit the BFRQ.

In step S106, the UE may transmit to the base station a message indicating that a beam configuration has been completed. The message may be transmitted on, for example, a PUCCH or may be transmitted on a PUSCH.

A Beam Recovery success (BR success) may indicate, for example, a case where the flow reaches step S106. On the other hand, a Beam Recovery failure (BR failure) may correspond to, for example, a case where BFRQ transmission reaches a given number of times or a beam failure recovery timer (Beam-failure-recovery-Timer) expires.

In addition, these step numbers are only numbers for description, and a plurality of steps may be integrated, or an order of the steps may be rearranged. Furthermore, whether or not to perform BFR may be configured to the UE by using a higher layer signaling.

By the way, as described above, according to Rel-15 NR, beam recovery is triggered when quality of all BFD-RSs becomes less than the given threshold (all beams have failures). When all beams have failures, it is assumed that there is not a UL beam (UL link), either, that the UE can use. Therefore, according to BFR that has been studied so far, a BFRQ is transmitted by using a PRACH.

However, it is necessary to reserve PRACH resources in advance for PRACH-based BFR. Hence, when the number of beams is large, there is a problem that resources are unnecessarily wasted (resources that cannot be used for data transmission/reception increase). Furthermore, PRACH-based BFR follows the random access procedure, and therefore there is also a problem that latency occurs until beam recovery. As a result, there is a risk that a communication throughput lowers.

Hence, the inventors of the present invention have conceived a method for suppressing resource waste, and performing BFR at a high speed.

The embodiment according to the present disclosure will be described in detail below with reference to the drawings. A radio communication method according to each embodiment may be each applied alone or may be applied in combination.

### (Radio Communication Method)

In one embodiment, when quality of part of BFD-RSs among BFD-RSs deteriorate, the UE may indicate a beam failure from the lower layer (PHY) layer to the higher layer (MAC layer).

A beam failure detected by part of the BFD-RSs instead of all BFD-RSs may be referred to as a Partial Beam Failure (PBF). Furthermore, beam failure recovery performed based on the PBF may be referred to as Partial Beam Failure Recovery (PBFR).

A BFRQ triggered based on the PBF may be transmitted by using a PUCCH or a PUSCH via a UL beam/UL link that is available or alive (is not disconnected).

Until the UE receives at least one of reconfiguration of a state of a Transmission Configuration Indication or a Transmission Configuration Indicator (TCI) (TCI state (TCI-state)), and activation of the TCI state, the UE may monitor the PDCCH according to a previous configuration of the TCI state.

Hereinafter, the TCI state will be briefly described. The TCI state may indicate (may include) QCL information. The TCI state (and/or QCL information) may be, for example, information related to QCL of a target channel (or a Reference Signal (RS) for the target channel) and another signal (e.g., another Downlink Reference Signal (DL-RS)), and may include at least one of, for example, information that relates to a DL-RS (DL-RS related information) to have the QCL relationship with, and information that indicates a QCL type (QCL type information).

The DL-RS related information may include at least one of information that indicates a DL-RS to have the QCL relationship with, and information that indicates a resource of the DL-RS. When, for example, a plurality of Reference Signal sets (RS sets) are configured to the UE, the DL-RS related information may indicate at least one of a DL-RS that has the QCL relationship with a channel (or a port of the channel) among RSs included in the RS sets, and a resource for the DL-RS.

Information related to QCL of a PDCCH (or a DMRS antenna port related to the PDCCH) and a given DL-RS may be referred to as a TCI state for the PDCCH. The UE may decide the TCI state for the PDCCH (CORESET) based on an RRC signaling and an MAC CE.

For example, one or a plurality of (K) TCI states may be configured to the UE per CORESET by a higher layer signaling. Furthermore, the UE may activate one or a plurality of TCI states of configured TCI states per CORESET by using the MAC CE. The UE may monitor (reception processing) each CORESET based on the activated TCI state.

PBF detection, BFRQ transmission and reconfiguration/activation of the TCI state will be described in detail below.

### <Detection of PBF>

When the given condition is satisfied, the UE may transmit a notification of a PBF (may indicate a PBF instance) from the PHY layer to the MAC layer.

When, for example, radio link quality (e.g., at least one of a BLER, Reference Signal Received Power (RSRP), Reference Signal Received Quality (RSRQ) and a Signal to Interference plus Noise Ratio (SINR)) of resource configurations of a certain rate or a certain number of BFD-RSs of configured BFD-RSs is worse than a threshold Q_{OUT,LR}, the UE may detect an occurrence of the PBF, and indicate the PBF instance to the MAC layer.

In addition, a name that indicates the radio link quality may be expressed by being added a word "L1-". For example, the RSRP, the RSRQ and the SINR may be referred to as L1-RSRP, LI-RSRQ and an LI-SINR, respectively.

When receiving the PBF instance notification from the PHY layer of the UE, the MAC layer of the UE may start a given timer (that may be a beam failure detection timer or a PBF detection timer). When receiving the PBF instance notification a certain number of times or more until the given timer expires, the MAC layer of the UE may trigger PBFR (e.g., trigger transmission of PBFRQ described below). The certain number of times may be configured to the UE by a higher layer signaling, or may be defined by a specification. In addition, the certain number of times may be configured as a value for PBF detection different from *beamFailurelnstanceMaxCount* described with reference to Fig. 1.

Information related to the BFD-RS for PBF and the information related to the above threshold Q_{OUT,LR} may be configured (notified) to the UE by using a higher layer signaling, or may be defined by a specification. For example, information related to the above certain rate or certain number may be configured to the UE based on information related to a BFD-RS of RRC (e.g., a beam-Failure-Detection-RS-ResourceConfig information element or a failureDetectionResourcesToAddModList field).

In addition, when the information related to the above certain rate or certain number is not configured, the UE may assume that the certain rate or the certain number is a given value (e.g., 25%, 50%, one or two).

PBF detection may not be applied to all cells. For example, whether or not to apply PBF detection to a specific cell (or a specific SCell) may be configured to the UE by using a higher layer signaling, a physical layer signaling or a combination of these signalings. Whether or not to apply PBF detection may be collectively configured in a unit of all cells (or all SCells), or may be configured specifically to each cell.

Furthermore, the UE may assume that PBF detection is applied to a general Secondary Cell (SCell), and PBF detection is not applied to other cells (e.g., a Primary Cell (PCell) and a Primary Secondary Cell (PSCell)).

This example will describe a case where four BFD-RSs (BFD-RSs #1 to #4) are configured to the UE based on information related to BFD-RSs, and, furthermore, the number of RSs for PBF is configured as 2. In addition, this example assumes that each BFD-RS is transmitted by using a respectively different beam, yet is not limited to this.

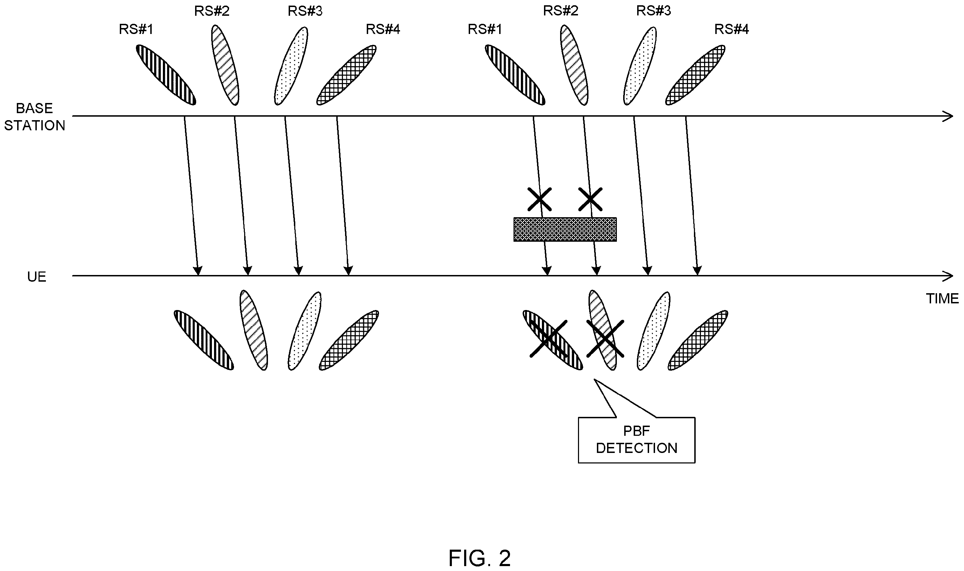

When link quality of two or more RSs of four RSs becomes worse than the given threshold, the PHY layer may indicate the PBF instance to the MAC layer in the UE. In an example in Fig. 2, radio link quality of the RSs #1 and #2 deteriorates, and then the UE detects PBF.

### <PBFRQ>

When detecting PBF, the UE may transmit a BFRQ by using a PUCCH or a PUSCH. In this regard, the BFRQ may be transmitted based on at least one of a UL beam, a UL link, a TCI and a spatial relation that is available or alive (is not disconnected).

The BFRQ transmitted in response to the PBF may be referred to as a Partial Beam Failure Recovery reQuest (PBFRQ).

Whether or not the PBFRQ can be transmitted may be configured to the UE by using a higher layer signaling. Whether or not to apply transmission of the PBFRQ in a specific cell (or a specific SCell) may be configured by using a higher layer signaling, a physical layer signaling or a combination of these signalings. Whether or not to apply transmission of the BFRQ for the PBF may be collectively configured in a unit of all cells (or all SCells), or may be configured specifically to each cell.

At least one of the UL beam, the UL link, the TCI and the spatial relation that can be used (applied) for transmission of the PBFRQ may be configured to the UE by using a higher layer signaling.

Furthermore, when Carrier Aggregation (CA) or Dual Connectivity (DC) is configured to the UE, transmission of a PBFRQ for a certain cell may follow a PUCCH/PUSCH transmission rule according to legacy CA or DC. For example, the UE to which CA or DC is configured may determine which cell is used to transmit the PBFRQ for the certain cell, or which spatial relation is used to transmit the PBFRQ according to the PUCCH/PUSCH transmission rule according to legacy CA or DC.

In addition, when CA or DC is configured to the UE, which cell transmits the PBFRQ for the certain cell (e.g., the PCell transmits the PBFRQ or a corresponding specific SCell transmits the PBFRQ) may be configured by a higher layer signaling.

The PBFRQ may be transmitted as an MAC signaling (e.g., MAC CE) by using a PUSCH, or may be transmitted as a physical layer signaling (e.g., UCI) by using a PUCCH (or a PUSCH).

The PBFRQ may be transmitted by using a UL grant-based PUSCH whose resource is dynamically scheduled, or may be transmitted by using a configured grant (that may be referred to as UL grant-free)-based PUSCH whose resource is semi-persistently configured.

The PBFRQ may include information (e.g., at least one of following (1) to (5)) related to a beam failure recovery request:
(1) Information indicating a request for beam recovery,
(2) A cell ID,
(3) A BWP ID,
(4) A measurement result of a new candidate beam (L1-RSRP), and
(5) An index related to a new candidate beam (a beam index, a CSI-RS ID, an SSB index or a TCI state ID).

The above cell ID in (2) and BWP ID in (3) may be associated with a cell and a BWP in which a new candidate beam has been detected (or whose beam/link/TCI state needs to be established), respectively. By giving notification of this information, it is possible to appropriately notify the base station of information of a suitable new candidate beam even when the new candidate beams are detected in a plurality of cells or a plurality of BWPs.

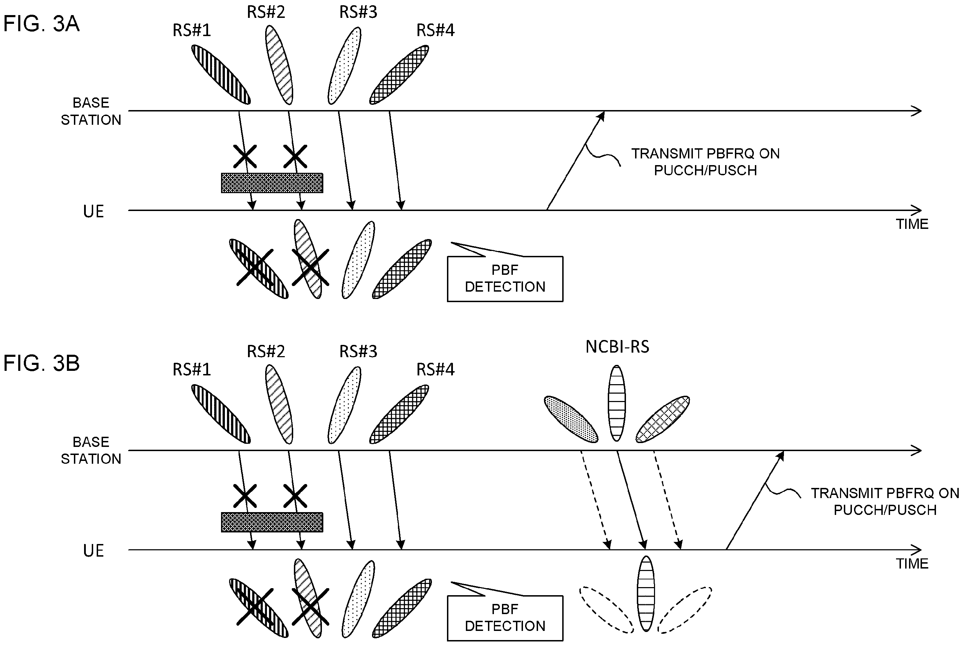

Figs. 3A and 3B are diagrams illustrating one example of PBFRQ transmission after PBF detection. This example mainly illustrates processing after PBF detection illustrated in Fig. 2. As illustrated in Fig. 3A, the UE may transmit the PBFRQ by using a PUCCH or a PUSCH based on at least one of an alive UL beam/link/TCI/spatial relation after PBF detection.

Furthermore, as illustrated in Fig. 3B, the UE may search a new candidate beam as described in step S103 in Fig. 1 after PBF detection, and specify a suitable new candidate beam. Furthermore, the UE may transmit the PBFRQ by using the PUCCH or the PUSCH based on at least one of the alive UL beam/link/TCI/spatial relation. The PBFRQ may include at least one of information of the specified suitable new candidate beam and a corresponding TCI state (that may be a TCI state ID).

### [MAC CE That Indicates PBFRQ]

The MAC CE that indicates the PBFRQ may be referred to as, for example, a PBFRQ MAC CE. The UE may transmit a MAC Protocol Data Unit (PDU) including the PBFRQ MAC CE by using a PUSCH.

An MAC header (more specifically, an MAC subheader) of the MAC PDU may include a Logical Channel Identifier (LCID) that indicates a value (index) associated with the PBFRQ MAC CE. The LCID may be defined as a value between, for example, "100001" and "101110". The LCID corresponds to information that indicates the request for beam recovery in above (1).

A size of the PBFRQ MAC CE may be 0 bit, or may be 1 or more octets (1 octet is 8 bits).

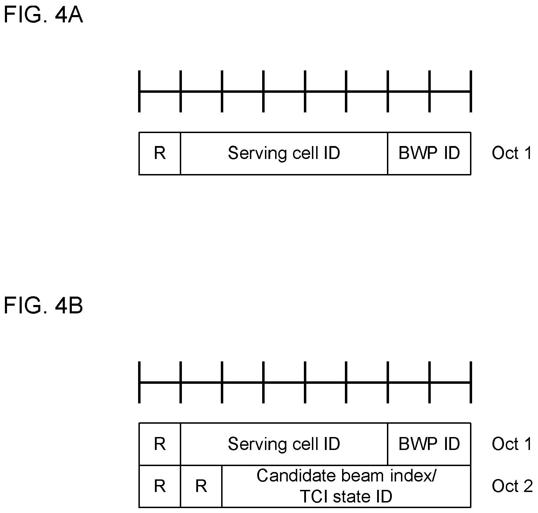

Figs. 4A and 4B are diagrams illustrating one example of a PBFRQ MAC CE configuration. Fig. 4A illustrates one example of a PBFRQ MAC CE (that may be referred to as a PBFRQ MAC CE type 1) whose size is 8 bits. Fig. 4B illustrates one example of a PBFRQ MAC CE (that may be referred to as a PBFRQ MAC CE type 2) whose size is 16 bits.

A size and an arrangement of each field in Figs. 4A and 4B are one example, and are not limited to these.

"R" indicates a field of a reserved bit, and may not be used for notification of information in particular, or may be freely used. "R" may be fixed to a given value (e.g., 0) in the specification.

A "Serving cell ID" indicates a field of a cell ID of a serving cell. In addition, the "Serving cell ID" may indicate a field (that may be indicated simply as a "Cell ID") of a cell ID that is not the serving cell.

A "BWP ID" indicates a field of a BWP ID. A "Candidate beam index/TCI state ID" is a field for an index related to a new candidate beam. The UE may transmit the MAC CE in Fig. 4B when giving notification of the index related to the new candidate beam, and transmit the MAC CE in Fig. 4A or an MAC CE of 0 bit when not giving notification of the index.

### [UCI That Indicates PBFRQ]

The information related to the beam failure recovery request in above (1) to (5) may be included as explicit information (bit sequence) in UCI, or may be implicitly notified.

For example, UCI that indicates a PBFRQ may include a field that indicates whether or not beam recovery is triggered as the information that indicates the request for beam recovery in above (1). The field may be expressed by 1 bit, for example, "1" may mean that beam recovery is triggered, and "0" may mean that beam recovery is not triggered.

When the UCI that indicates the PBFRQ includes information that indicates that beam recovery is triggered (e.g., the above field indicates "1"), at least one of a measurement result of a new candidate beam and an index related to the new candidate beam may be included in the UCI.

In this regard, a beam failure that is already defined in Rel-15 NR and detected by all BFD-RSs may be referred to a Full Beam Failure (FBF). A BFRQ triggered when the FBF is detected may be referred to as a Full BFRQ (FBFRQ).

The UE may report at least one of the PBFRQ and the FBFRQ by using the UCI. In addition, when, for example, the UE is connected with a plurality of Transmission/Reception Points (TRPs), and detecting the FBF at one TRP, the UE can transmit the FBFRQ related to the FBF by using a PUCCH/PUSCH of a cell of the other TRP.

The number of bits of the UCI in a case where the PBFRQ is reported may be different from the number of bits of the UCI in a case where the FBFRQ is reported. For example, the number of bits of the UCI in the case where the PBFRQ is reported may be X bits (e.g., X = 1) larger than the number of bits of the UCI in the case where the FBFRQ is reported. Which one of the PBFRQ and the FBFRQ has been transmitted may be specified based on the X bits.

The above-described information related to the beam failure recovery request may be implicitly notified by at least one of a resource or a sequence for transmitting the UCI (that may be, for example, a sequence of the UCI itself or a sequence of a DMRS associated with a channel for transmitting the UCI).

For example, one or a plurality of resources for at least one of the PBFRQ and the FBFRQ may be configured to the UE by a higher layer signaling. The resource may be a PUCCH resource, or may be a PUSCH resource (e.g., configured grant-based PUSCH resource).

Furthermore, an association between the resource (that may be a resource position and a resource index) and an index related to the new candidate beam may be configured to the UE by a higher layer signaling, or may be defined by the specification.

A minimum index (or ID) of the PUCCH resource configured to the UE is associated with a minimum index of the new candidate beam, and other indices may be associated in an ascending order. When, for example, PUCCH resources #0 to #n are configured to the UE, transmitting the BFRQ using the PUCCH resource #0 from the UE may indicate notification of a new candidate beam #0, and transmitting the BFRQ using the PUCCH resource #1 from the UE may indicate notification of a new candidate beam #1.

A minimum PRB index (or symbol index or slot index) related to the PUCCH resource configured to the UE is associated with the minimum index of the new candidate beam, and other indices may be associated in an ascending order.

### <Reconfiguration/Activation of TCI State of PDCCH>

When receiving the BFRQ (PBFRQ) from the UE, the base station may perform at least one of reconfiguration and activation of a TCI of a PDCCH for the UE by using a higher layer signaling (e.g., at least one or a combination of an RRC signaling and an MAC CE). In addition, information indicating reconfiguration and activation of the TCI of the PDCCH may be included in a response signal (gNB response) for the BFRQ (PBFRQ).

When receiving the BFRQ (PBFRQ) from the UE, the base station may trigger a reporting of radio link quality (e.g., at least one of a BLER, RSRP, RSRQ and an SINR) of the UE (i.e., the base station may transmit a signal that indicates triggering of the reporting to the UE) before performing reconfiguration and activation of the TCI of the PDCCH for the UE.

In addition, until at least one of reconfiguration of a TCI state and an activation signal of the TCI is received, the UE may monitor the PDCCH according to a previous configuration of the TCI state.

When PBF detection (or PBFRQ transmission) is configured, one or both of a CORESET for BFR and a search space set for BFR may not be configured to the UE. In this case, the UE may receive a response signal of the base station for the PBFRQ via the PDCCH/PDSCH based on an alive beam or TCI configuration.

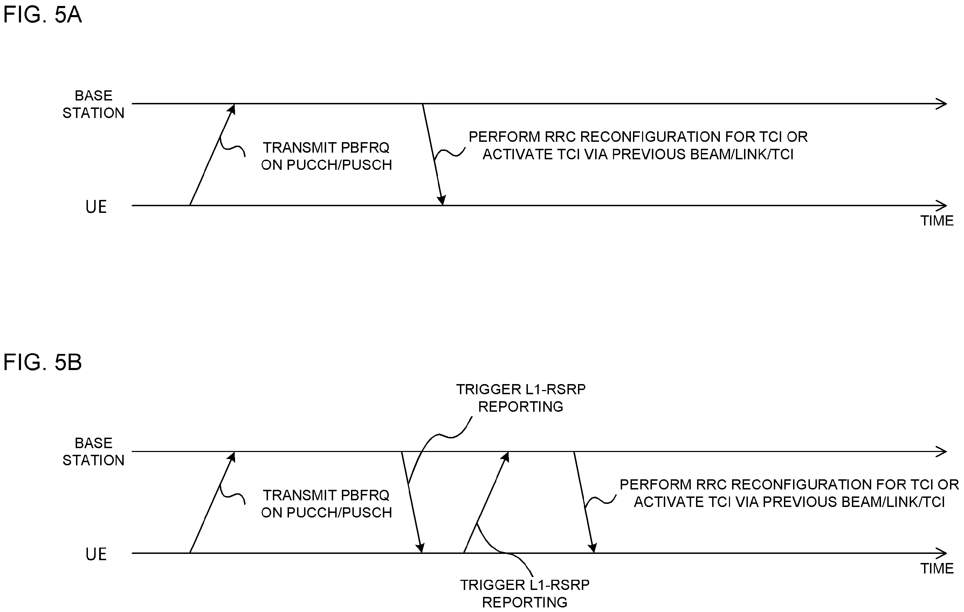

Figs. 5A and 5B are diagrams illustrating one example of reconfiguration/activation of a TCI after PBFRQ transmission. This example mainly illustrates processing after PBFRQ transmission illustrated in Fig. 3. As illustrated in Fig. 5A, after PBFRQ transmission, the UE may monitor the PDCCH based on at least one of a beam/link/TCI/spatial relation (that is alive from before PBF detection) before PBF detection, and receive at least one of information of reconfiguration of the TCI state related to the PDCCH, and an activation signal of the TCI state.

Furthermore, as illustrated in Fig. 5B, after PBFRQ transmission, the UE may receive a trigger of a radio link quality (e.g., L1-RSRP in this case) reporting from the base station, and measure and report the radio link quality in response to the trigger. The base station may update the configuration of the TCI state related to the PDCCH of the UE based on the reporting. After reporting the above radio link quality, the UE may monitor the PDCCH based on at least one of a beam/link/TCI/spatial relation (that is alive from before PBF detection) before PBF detection, and receive at least one of the information of reconfiguration of the TCI state related to the PDCCH, and the activation signal of the TCI state.

Alive PUCCH/PUSCH-based beam recovery that is triggered by a PBF according to the above-described embodiment can shorten a time taken until recovery compared to PRACH-based beam recovery that is triggered by an FBF.

Furthermore, the UE can follow a previously alive beam (alive TCI state) after transmitting a beam failure recovery request, and make a behavior of the UE a consistent behavior. Furthermore, the UE may not configure a special CORESET and search space set for BFR.

### <Modified Example>

In the present disclosure, a beam may be read as a resource, a reference signal, a reference signal resource, a CSI-RS, an SS/PBCH block and an index related to at least one of these.

### (Radio Communication System)

The configuration of the radio communication system according to the embodiment of the present disclosure will be described below. This radio communication system uses at least one or a combination of the radio communication method described in the above embodiment to perform communication.

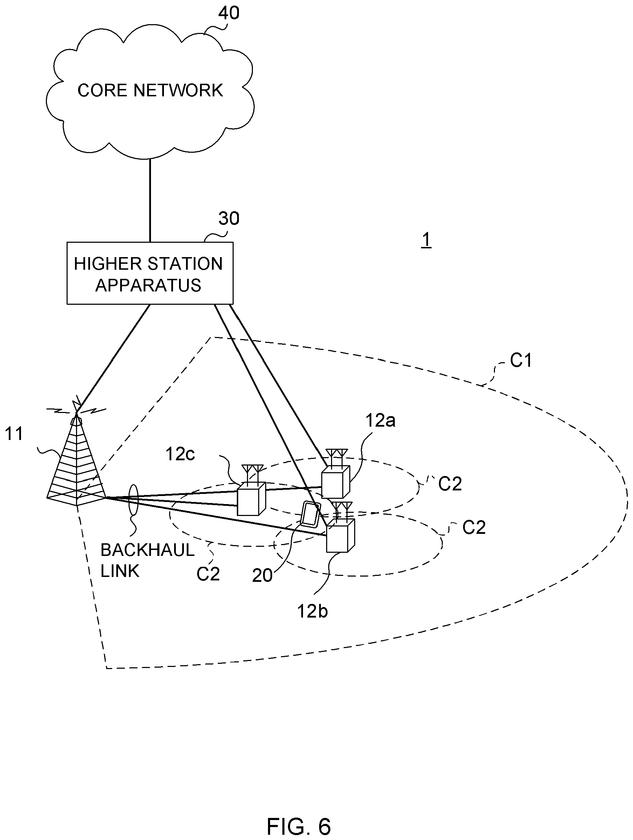

Fig. 6 is a diagram illustrating one example of a schematic configuration of the radio communication system according to the one embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a base station 11 that forms a macro cell C1 of a relatively wide coverage, and base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 6.

The user terminal 20 can connect with both of the base station 11 and the base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the base station 11 can communicate by using a carrier (also referred to as a legacy carrier) of a narrow bandwidth in a relatively low frequency band (e.g., 2 GHz). On the other hand, the user terminal 20 and each base station 12 may use a carrier of a wide bandwidth in a relatively high frequency band (e.g., 3.5 GHz or 5 GHz) or may use the same carrier as that used between the user terminal 20 and the base station 11. In this regard, a configuration of the frequency band used by each base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, specific filtering processing performed by a transceiver in a frequency domain, and specific windowing processing performed by the transceiver in a time domain.

For example, a case where subcarrier spacings of constituent OFDM symbols are different and/or a case where the numbers of OFDM symbols are different on a certain physical channel may be read as that numerologies are different.

The base station 11 and each base station 12 (or the two base stations 12) may be connected by way of wired connection (e.g., optical fibers compliant with a Common Public Radio Interface (CPRI) or an X2 interface) or radio connection.

The base station 11 and each base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each base station 12 may be connected with the higher station apparatus 30 via the base station 11.

In this regard, the base station 11 is a base station that has a relatively wide coverage, and may be referred to as a macro base station, an aggregate node, an eNodeB (eNB) or a transmission/reception point. Furthermore, each base station 12 is a base station that has a local coverage, and may be referred to as a small base station, a micro base station, a pico base station, a femto base station, a Home eNodeB (HeNB), a Remote Radio Head (RRH) or a transmission/reception point. The base stations 11 and 12 will be collectively referred to as a base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes at least one of downlink control channels (a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio link quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### <Base Station>

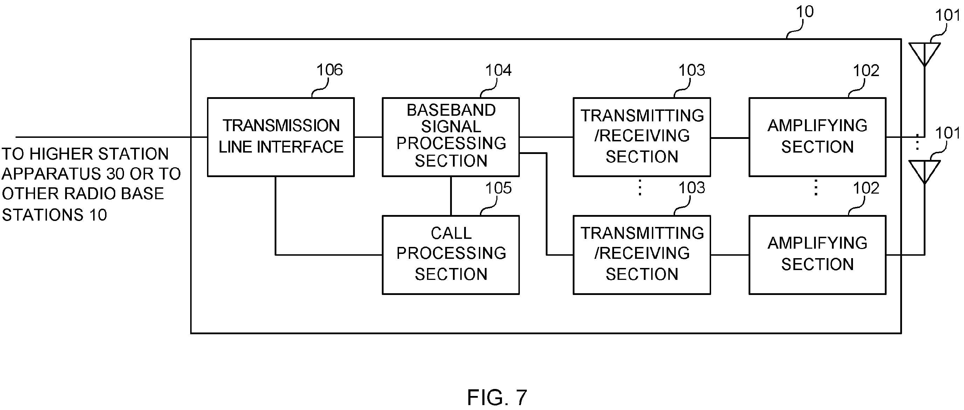

Fig. 7 is a diagram illustrating one example of an overall configuration of the base station according to the one embodiment. The base station 10 includes pluralities of transmission/reception antennas 101, amplifying sections 102 and transmitting/receiving sections 103, a baseband signal processing section 104, a call processing section 105 and a transmission line interface 106. In this regard, the base station 10 only needs to be configured to include one or more of each of the transmission/reception antennas 101, the amplifying sections 102 and the transmitting/receiving sections 103.

User data transmitted from the base station 10 to the user terminal 20 on downlink is input from the higher station apparatus 30 to the baseband signal processing section 104 via the transmission line interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101. The transmitting/receiving sections 103 can be composed of transmitters/receivers, transmission/reception circuits or transmission/reception apparatuses described based on a common knowledge in a technical field according to the present disclosure. In this regard, the transmitting/receiving sections 103 may be composed as an integrated transmitting/receiving section or may be composed of transmission sections and reception sections.

Meanwhile, each amplifying section 102 amplifies a radio frequency signal received by each transmission/reception antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the transmission line interface 106. The call processing section 105 performs call processing (such as configuration and release) of a communication channel, state management of the base station 10 and radio resource management.

The transmission line interface 106 transmits and receives signals to and from the higher station apparatus 30 via a given interface. Furthermore, the transmission line interface 106 may transmit and receive (backhaul signaling) signals to and from the another base station 10 via an inter-base station interface (e.g., optical fibers compliant with the Common Public Radio Interface (CPRI) or the X2 interface).

In addition, each transmitting/receiving section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present disclosure. Furthermore, each transmission/reception antenna 101 can be composed of an array antenna, for example. Furthermore, each transmitting/receiving section 103 is configured to be able to apply single BF and multiple BF.

Each transmitting/receiving section 103 may transmit a signal by using a transmission beam, or may receive a signal by using a reception beam. Each transmitting/receiving section 103 may transmit and/or receive a signal by using a given beam determined by a control section 301.

Each transmitting/receiving section 103 may receive from the user terminal 20 and/or transmit to the user terminal 20 various pieces of information described in each of the above embodiment.

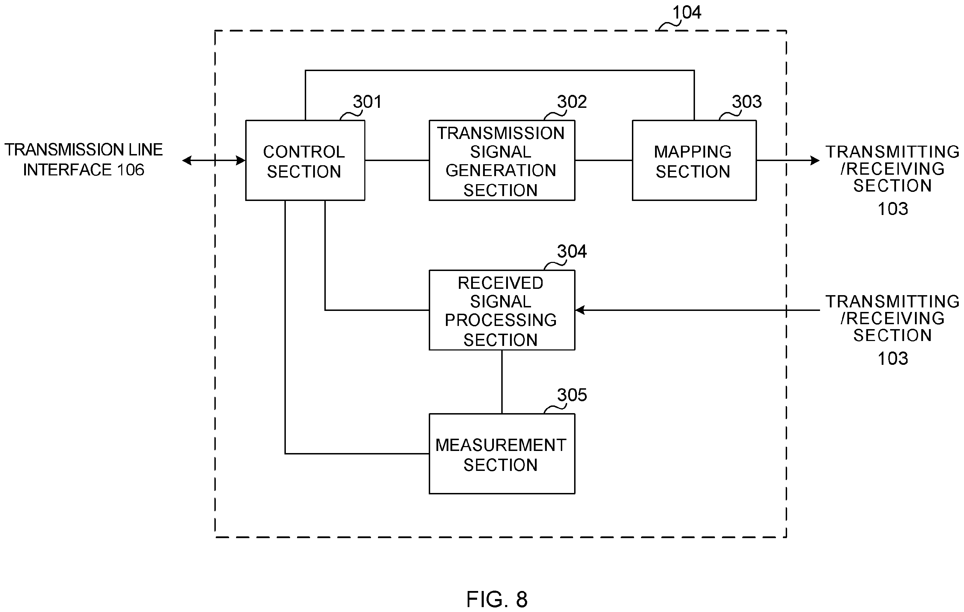

Fig. 8 is a diagram illustrating one example of a function configuration of the base station according to the one embodiment. In addition, this example mainly illustrates function blocks of characteristic portions according to the present embodiment, and may assume that the base station 10 includes other function blocks, too, that are necessary for radio communication.

The baseband signal processing section 104 includes at least the control section (scheduler) 301, a transmission signal generating section 302, a mapping section 303, a received signal processing section 304 and a measurement section 305. In addition, these components only need to be included in the base station 10, and part or all of the components may not be included in the baseband signal processing section 104.

The control section (scheduler) 301 controls the entire base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 controls scheduling of synchronization signals (e.g., a PSS/a SSS) and downlink reference signals (e.g., a CRS, a CSI-RS and a DMRS).

The control section 301 may perform control for forming the transmission beam and/or the reception beam by using digital BF (e.g., precoding) of the baseband signal processing section 104, and/or analog BF (e.g., phase rotation) of each transmitting/receiving section 103.

The transmission signal generating section 302 generates a downlink signal (such as a downlink control signal, a downlink data signal or a downlink reference signal) based on an indication from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment for giving notification of downlink data allocation information, and/or a UL grant for giving notification of uplink data allocation information based on the indication from the control section 301. The DL assignment and the UL grant are both DCI, and conform to a DCI format. Furthermore, the transmission signal generating section 302 performs encoding processing and modulation processing on the downlink data signal according to a code rate and a modulation scheme determined based on Channel State Information (CSI) from each user terminal 20.

The mapping section 303 maps the downlink signal generated by the transmission signal generating section 302, on given radio resources based on the indication from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

The control section 301 may control Radio Link Monitoring (RLM) and/or Beam Recovery (BR) for the user terminal 20. The control section 301 may perform control for transmitting a response signal to the user terminal 20 in response to a BFRQ/PBFRQ.

### <User Terminal>

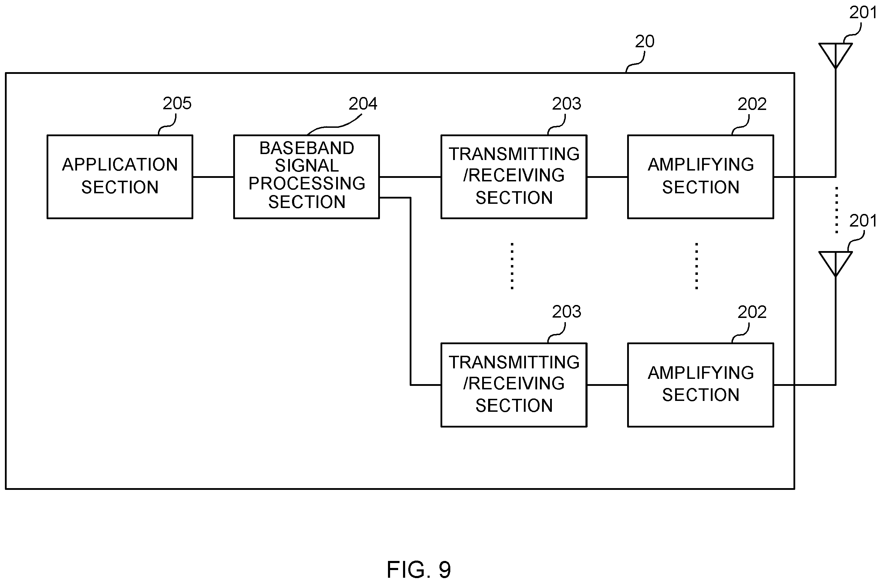

Fig. 9 is a diagram illustrating one example of an overall configuration of the user terminal according to the one embodiment. The user terminal 20 includes pluralities of transmission/reception antennas 201, amplifying sections 202 and transmitting/receiving sections 203, a baseband signal processing section 204 and an application section 205. In this regard, the user terminal 20 only needs to be configured to include one or more of each of the transmission/reception antennas 201, the amplifying sections 202 and the transmitting/receiving sections 203.

Each amplifying section 202 amplifies a radio frequency signal received at each transmission/reception antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmission/reception circuits or transmission/reception apparatuses described based on the common knowledge in the technical field according to the present disclosure. In this regard, the transmitting/receiving sections 203 may be composed as an integrated transmitting/receiving section or may be composed of transmission sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

In addition, each transmitting/receiving section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present disclosure. Furthermore, each transmission/reception antenna 201 can be composed of an array antenna, for example. Furthermore, each transmitting/receiving section 203 is configured to be able to apply single BF and multiple BF.

Each transmitting/receiving section 203 may transmit a signal by using a transmission beam, or may receive a signal by using a reception beam. Each transmitting/receiving section 203 may transmit and/or receive a signal by using a given beam determined by a control section 401.

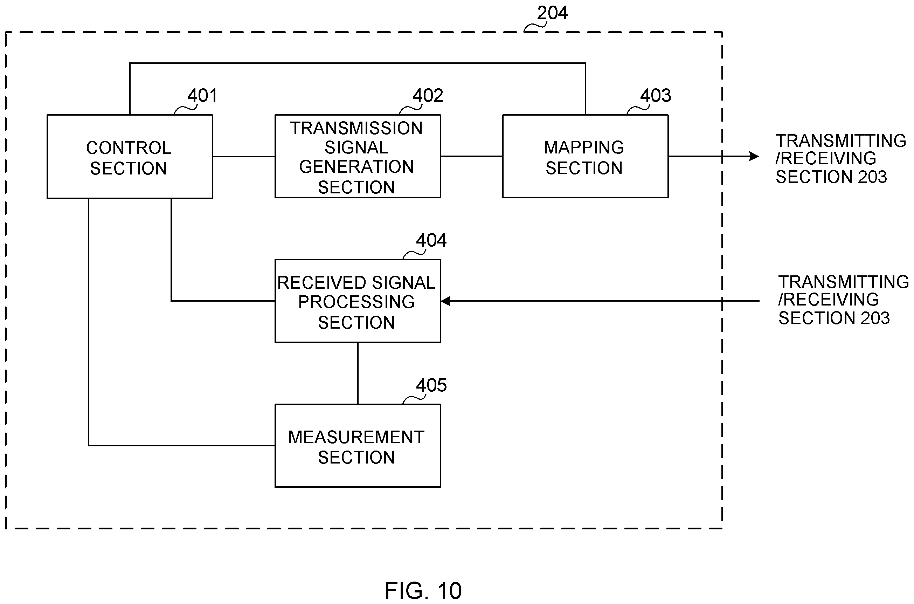

Fig. 10 is a diagram illustrating one example of a function configuration of the user terminal according to the one embodiment. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least the control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the base station 10. The control section 401 controls generation of an uplink control signal and/or an uplink data signal based on a result obtained by deciding whether or not it is necessary to perform retransmission control on the downlink control signal and/or the downlink data signal.

The control section 401 may perform control for forming the transmission beam and/or the reception beam by using digital BF (e.g., precoding) of the baseband signal processing section 204, and/or analog BF (e.g., phase rotation) of each transmitting/receiving section 203.

Furthermore, when obtaining from the received signal processing section 404 various pieces of information notified from the base station 10, the control section 401 may update parameters used for control based on the various pieces of information.

The transmission signal generating section 402 generates an uplink signal (such as an uplink control signal, an uplink data signal or an uplink reference signal) based on an indication from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates, for example, an uplink control signal related to transmission acknowledgement information and Channel State Information (CSI) based on the indication from the control section 401. Furthermore, the transmission signal generating section 402 generates an uplink data signal based on the indication from the control section 401. When, for example, the downlink control signal notified from the base station 10 includes a UL grant, the transmission signal generating section 402 is instructed by the control section 401 to generate an uplink data signal.

The mapping section 403 maps the uplink signal generated by the transmission signal generating section 402, on radio resources based on the indication from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the base station 10. The received signal processing section 404 can be composed of a signal processor, a signal processing circuit or a signal processing apparatus described based on the common knowledge in the technical field according to the present disclosure. Furthermore, the received signal processing section 404 can compose the reception section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

Each transmitting/receiving section 203 may receive a Beam Failure Detection Reference Signal (BFD-RS). Each transmitting/receiving section 203 may transmit the BFRQ or the PBFRQ to the base station 10.

The control section 401 may control Radio Link Monitoring (RLM) and/or Beam Failure Recovery (RFR) based on the measurement result of the measurement section 405.

The control section 401 may include an MAC layer processing section and a PHY layer processing section. In addition, the MAC layer processing section and/or the PHY layer processing section may be realized by one or a combination of the control section 401, the transmission signal generating section 402, the mapping section 403, the received signal processing section 404 and the measurement section 405.

The MAC layer processing section performs processing of the MAC layer, and the PHY layer processing section performs processing of the PHY layer. For example, downlink user data or broadcast information input from the PHY layer processing section may be processed by the MAC layer processing section, and then output to a higher layer processing section that performs processing of an RLC layer and a PDCP layer.

The PHY layer processing section may detect a beam failure or a Partial Beam Failure (PBF). The PHY layer processing section may notify the MAC layer processing section of information (instance) related to the detected beam failure or PBF. That is, when radio link quality of resource configurations of part of BFD-RSs of configured BFD-RSs is worse than a given threshold, the control section 401 may indicate an instance (e.g., PBF instance) related to the beam failure from a lower layer (PHY layer) to a higher layer (MAC layer).

The MAC layer processing section may trigger transmission of a Beam Failure Recovery reQuest (BFRQ) or a PBFRQ in the PHY layer processing section. For example, the MAC layer processing section may trigger transmission of the beam failure recovery request based on the information related to the beam failure notified from the PHY layer processing section. That is, when the higher layer (MAC layer) receives the above instance a certain number of times or more, the control section 401 may trigger transmission of the BFRQ/PBFRQ that uses a PUCCH or a PUSCH.

In addition, the control section 401 may control transmission of the BFRQ or the PBFRQ based on at least one of an alive Uplink (UL), UL beam, UL Transmission Configuration Indication state (TCI state) and UL spatial relation.

Until each transmitting/receiving section 203 receives at least one of information of reconfiguration and an activation signal of the TCI state after transmitting the BFRQ or the PBFRQ, the control section 401 may perform control for monitoring the PDCCH according to a previous configuration of the TCI state.

### (Hardware Configuration)

In addition, the block diagrams used to describe the above embodiment illustrate blocks in function units. These function blocks (components) are realized by an arbitrary combination of at least one of hardware and software. Furthermore, a method for realizing each function block is not limited in particular. That is, each function block may be realized by using one physically or logically coupled apparatus or may be realized by using a plurality of these apparatuses formed by connecting two or more physically or logically separate apparatuses directly or indirectly (by using, for example, wired connection or radio connection). Each function block may be realized by combining software with the above one apparatus or a plurality of above apparatuses.

In this regard, the functions include judging, determining, deciding, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as a transmitting unit or a transmitter. As described above, the method for realizing each function block is not limited in particular.

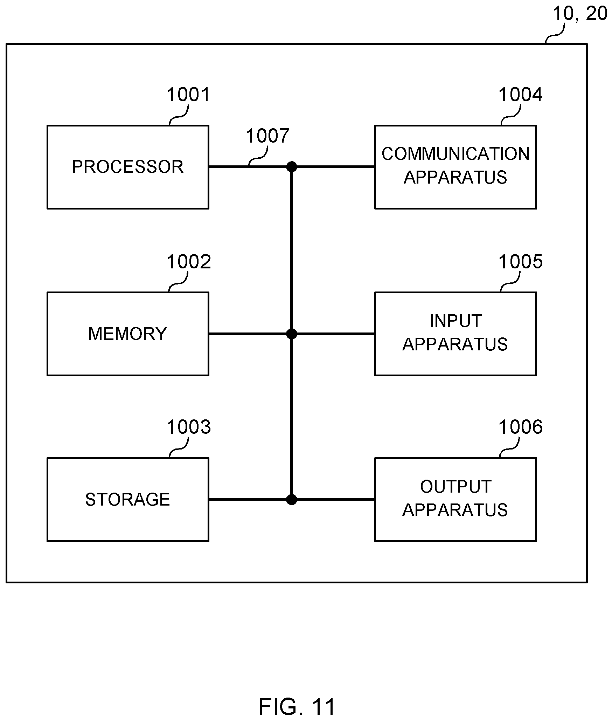

For example, the base station and the user terminal according to the one embodiment of the present disclosure may function as computers that perform processing of the radio communication method according to the present disclosure. Fig. 11 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the base station 10 and the user terminal 20 may be configured to include one or a plurality of apparatuses illustrated in Fig. 11 or may be configured without including part of the apparatuses.

For example, Fig. 11 illustrates the only one processor 1001. However, there may be a plurality of processors. Furthermore, processing may be executed by 1 processor or processing may be executed by 2 or more processors concurrently or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from at least one of the storage 1003 and the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception antennas 101 (201), amplifying sections 102 (202), transmitting/receiving sections 103 (203) and transmission line interface 106 may be realized by the communication apparatus 1004. Each transmitting/receiving section 103 may be physically or logically separately implemented as a transmission section 103a and a reception section 103b.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these types of hardware.

### (Modified Example)

In addition, each term that has been described in the present disclosure and each term that is necessary to understand the present disclosure may be replaced with terms having identical or similar meanings. For example, at least one of a channel and a symbol may be a signal (signaling). Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier and a carrier frequency.

A radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies.

The slot may include a plurality of mini slots. Each mini slot may include one or a plurality of symbols in the time domain. Furthermore, the mini slot may be referred to as a subslot. The mini slot may include a smaller number of symbols than those of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a Transmission Time Interval (TTI), a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that a given signal/channel is transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be indicated by a given index.

Names used for parameters in the present disclosure are in no respect restrictive names. Furthermore, numerical expressions that use these parameters may be different from those explicitly disclosed in the present disclosure. Various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiment described in the present disclosure and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used.

In the present disclosure, terms such as "precoding", a "precoder", a "weight (precoding weight)", "Quasi-Co-Location (QCL)", "transmission power", "phase rotation", an "antenna port", an "antenna port group", a "layer", "the number of layers", a "rank", a "beam", a "beam width", a "beam angle", an "antenna", an "antenna element" and a panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus, a reception apparatus or a communication apparatus. In addition, at least one of the base station and the mobile station may be a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are expanded based on these systems. Furthermore, a plurality of systems may be combined (e.g., a combination of LTE or LTE-A and 5G) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be regarded to "decide (determine)" judging, calculating, computing, processing, deriving, investigating, looking up, search and inquiry (e.g., looking up in a table, a database or another data structure), and ascertaining.

Furthermore, "deciding (determining)" may be regarded to "decide (determine)" receiving (e.g., receiving information), transmitting (e.g., transmitting information), input, output and accessing (e.g., accessing data in a memory).

Furthermore, "deciding (determining)" may be regarded to "decide (determine)" resolving, selecting, choosing, establishing and comparing. That is, "deciding (determining)" may be regarded to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends not to be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a receiving section that receives a Beam Failure Detection Reference Signal (BFD-RS); and
a control section that, when radio link quality of resource configurations of part of BFD-RSs of configured BFD-RSs is worse than a given threshold, indicates an instance related to a beam failure from a lower layer to a higher layer.

2. The user terminal according to claim 1, wherein, when the higher layer receives the instance a certain number of times or more, the control section triggers transmission of a beam failure recovery request that uses a physical uplink control channel or a physical uplink shared channel.

3. The user terminal according to claim 2, wherein the control section performs control to transmit the beam failure recovery request based on at least one of an alive uplink, beam, transmission configuration indication state and spatial relation.

4. The user terminal according to claim 2 or 3, wherein, until at least one of information of reconfiguration and an activation signal of a transmission configuration indication state is received after the beam failure recovery request is transmitted, the control section performs control to monitor a physical downlink control channel according to a previous configuration of the transmission configuration indication state.
